# EUROPEAN PATENT APPLICATION

(11) **EP 4 838 516 A1**
(43) Date of publication of application: **11.11.2026**
(21) Application number: 26175060.8
(22) Date of filing: 28.04.2026
(51) Int. Cl.: G09G 5/10, G02B 30/24, G09G 3/00

(54) **DISPLAY SYSTEM AND IMAGE PROCESSING METHOD**

(30) Priority: 07.05.2025 US 202563801151 P; 01.04.2026 CN 202610420918
(71) Applicant: InnoLux Corporation, Chu-Nan, Miao-Li 350 (TW)
(72) Inventor: SUMI, Naoki, 350 Miao-Li County (TW); EDO, Keiko, 350 Miao-Li County (TW); YANG, Hung-Wen, 350 Miao-Li County (TW)
(74) Representative: Straus, Alexander

(57) **Abstract**

A display system (100) and an image processing method are provided. The display system (100) includes an input unit (110), a processing unit (120), and an output unit (130). The input unit (110) is configured to receive an image data (200), wherein the image data (200) comprises a plurality of first original images (V1, V2, V3, V4, V5, V6, V7, V8) corresponding to a viewing angle interval (INT, INT1, INT2), and each of the first original images (V1, V2, V3, V4, V5, V6, V7, V8) has a gray level. The processing unit (120) is configured to adjust the image data (200) to generate an adjusted image data (300), wherein the processing unit (120) comprises an average image calculation block (121) and an image blending block (123). The output unit (130) is configured to output the adjusted image data (300) to a storage device (507) or a display device (10).

## Description

### Field of the Disclosure

The present disclosure relates to a display system and an image processing method according to claims1 and 11, and more particularly, to a display system and an image processing method capable of displaying different light intensities at different viewing angles.

### Background of the Disclosure

With the development of technology, display technologies that can present a gloss effect (Kirameki effect) that occurs when real light illuminates an object have been developed. However, limited by the structure of existing displays, a user may see image changes with excessive brightness differences within an interval near a specific viewing angle, thereby affecting the user experience. Therefore, how to improve the user experience has become a key development focus in the industry.

### Summary of the Disclosure

This in mind, the present disclosure aims at providing a display system and an image processing method, such that the probability that image changes with excessive brightness differences within an interval near a specific viewing angle may be reduced.

This is achieved by a display system and an image processing method with a processing unit configured to adjust the image data to generate an adjusted image data according to the claims. The dependent claims pertain to corresponding further developments and improvements.

As will be seen more clearly from the detailed description following below, the claimed display system includes an input unit, a processing unit, and an output unit. The input unit is configured to receive an image data, wherein the image data includes a plurality of first original images corresponding to a viewing angle interval, and each of the first original images has a gray level. The processing unit is configured to adjust the image data to generate an adjusted image data, wherein the processing unit includes an average image calculation block and an image blending block. The output unit is configured to output the adjusted image data to a storage device or a display device.

As will be seen more clearly from the detailed description following below, the claimed image processing method includes receiving an image data by an input unit, wherein the image data includes a plurality of first original images corresponding to a viewing angle interval, and each of the first original images has a gray level. The image data is adjusted by a processing unit to generate an adjusted image data, wherein the processing unit includes an average image calculation block and an image blending block. The adjusted image data is outputted by an output unit to a storage device or a display device.

### Brief Description of the Drawings

In the following, the disclosure is further illustrated by way of example, taking reference to the accompanying drawings. Thereof:
FIG. 1 is a block diagram of a first embodiment of a display system of the present disclosure;
FIG. 2 is a schematic diagram of an embodiment of a display device to which the display system of the present disclosure is applied;
FIG. 3 is a relationship diagram of gray levels of pixels of original images and blended images versus viewing angles in a first embodiment of the present disclosure;
FIG. 4 is a schematic diagram of a method for generating adjusted image data in a first embodiment of an image processing method of the present disclosure;
FIG. 5 is a schematic diagram of a method for generating adjusted image data in a second embodiment of the image processing method of the present disclosure;
FIG. 6 is a block diagram of a third embodiment of a design system and a content management system of the present disclosure;
FIG. 7 is a block diagram of a fourth embodiment of a design system and a content management system and a corresponding image processing method thereof of the present disclosure; and
FIG. 8 is a block diagram of a fifth embodiment of a design system and a content management system and a corresponding image processing method thereof of the present disclosure.

### Detailed Description

The content of the present disclosure will be described in detail below in conjunction with specific embodiments and the accompanying drawings. To make the content of the present disclosure clearer and more understandable, the following drawings may be simplified schematic diagrams, and the components therein may not be drawn to scale. Furthermore, the number and size of each component in the drawings are for illustrative purposes only and are not intended to limit the scope of the present disclosure.

Certain terms are used throughout the specification and the appended claims to refer to specific components. Those skilled in the art should understand that electronic device manufacturers may refer to the same component by different names, and this document does not intend to distinguish between components that have the same function but different names. In the following description and claims, terms such as "comprising" and "including" are open-ended terms and should therefore be interpreted as "comprising, but not limited to...".

Ordinal numbers such as "first," "second," etc., used in the description and claims to modify elements of the claims do not in themselves imply or represent any preceding ordinal number for the recited claim element, nor do they represent the order of one claim element relative to another, or the order in a manufacturing method. The use of such ordinal numbers is only to clearly distinguish a claim element having a certain name from another claim element having the same name.

It should be understood that the features in various different embodiments can be replaced, reorganized, and combined to complete other embodiments without departing from the spirit of the present disclosure. As long as the features of various embodiments do not violate the spirit of the disclosure or conflict with each other, they can be arbitrarily mixed and matched for use.

The display system and the image processing method of the present disclosure can be disposed in, for example, an electronic device. The electronic device may include, for example, a display device, a light-emitting device, a sensing device, an antenna device, a touch device, a tiling device, a packaging device, or another suitable electronic device, but is not limited thereto. The electronic device can be, for example, a bendable, stretchable, foldable, rollable, and/or flexible electronic device, but is not limited to this. The display device can be applied to, for example, a notebook computer, a public display, a tiling display, a vehicle display, a touch display, a television, a monitor, a smartphone, a tablet computer, a light source module, a lighting device, military equipment, or an electronic device applied to the aforementioned products, but is not limited thereto. The sensing device can be, for example, a sensing device for detecting changes in capacitance, light, thermal energy, or ultrasound, but is not limited thereto. The sensing device may, for example, comprise a biosensor, a touch sensor, a fingerprint sensor, another suitable sensor, or a combination of the aforementioned types of sensors. The display device may, for example, comprise liquid crystal molecules, light-emitting diodes, fluorescent materials, phosphor materials, other suitable display media, or a combination of the foregoing, but is not limited thereto. The light-emitting diodes may, for example, comprise organic light-emitting diodes (OLED), mini light-emitting diodes (mini LED), micro light-emitting diodes (micro LED), or quantum dot light-emitting diodes (quantum dot, QD, which may be, for example, QLED, QDLED), or other suitable materials or any arrangement and combination of the above materials, but is not limited thereto. The antenna device can be, for example, a liquid crystal antenna, a varactor diode antenna, or another type of antenna, but is not limited thereto. The tiling device may, for example, comprise a tiling display device or a tiling antenna device, but is not limited thereto. In addition, the shape of the electronic device can be, for example, rectangular, circular, polygonal, a shape with curved edges, curved, or another suitable shape. It should be noted that the electronic device of the present disclosure can be various combinations of the above-mentioned devices, but is not limited thereto.

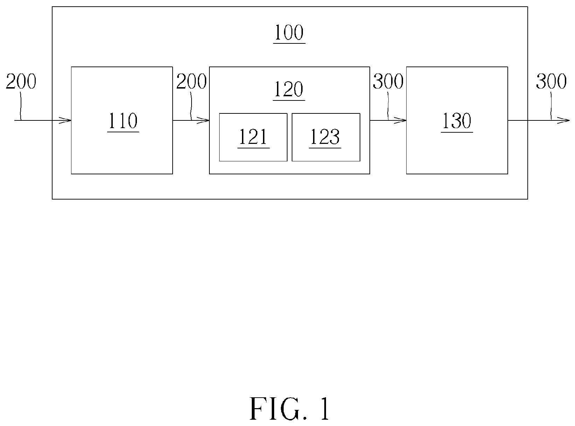

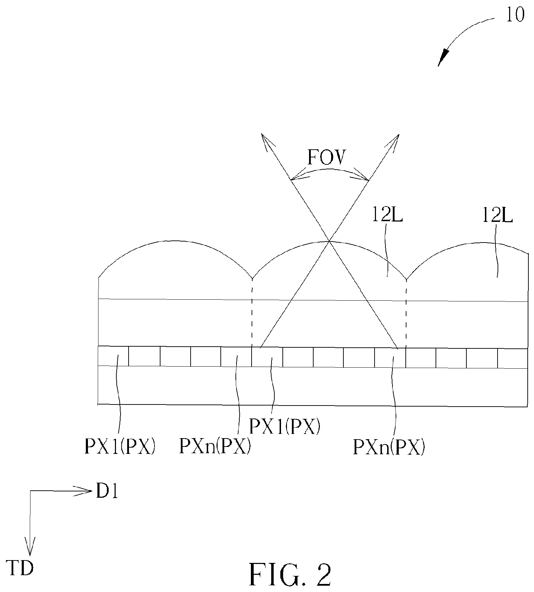

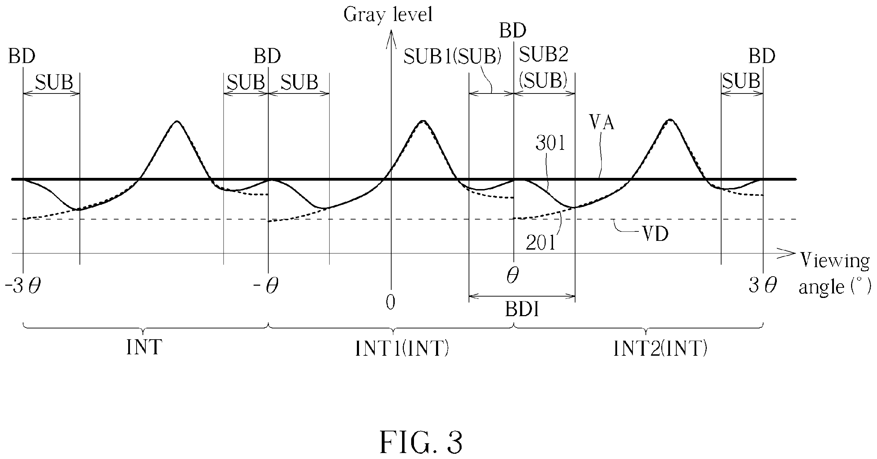

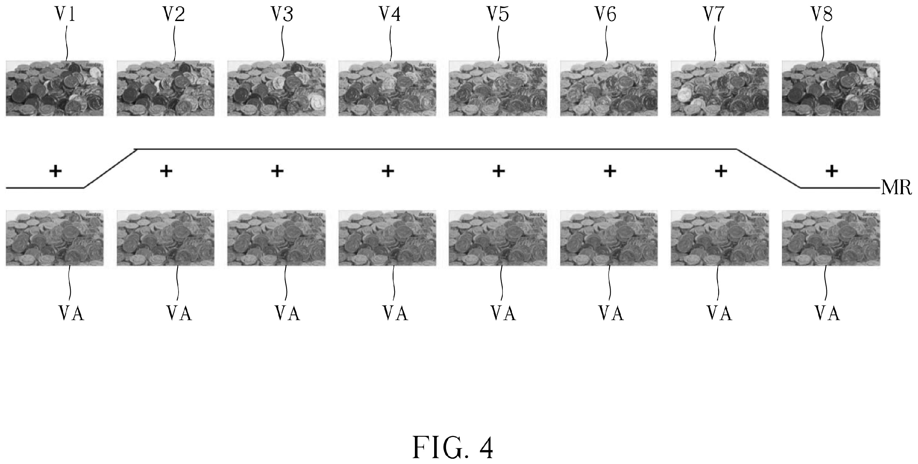

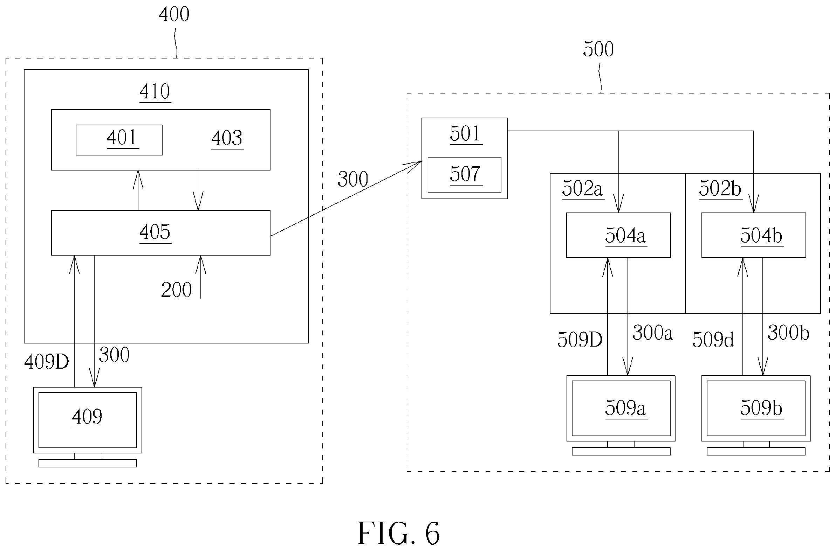

Please refer to FIG. 1 to FIG. 4. A display system 100 comprises an input unit 110, a processing unit 120, and an output unit 130. The input unit 110 is configured to receive an image data 200, wherein the image data 200 comprises a plurality of first original images (e.g., original images V1 to V8 corresponding to the viewing angle interval INT in FIG. 3 and FIG. 4), corresponding to a viewing angle interval, and each of the first original images has a gray level. The processing unit 120 is configured to adjust the image data 200 to generate an adjusted image data 300, wherein the processing unit 120 comprises an average image calculation block 121 and an image blending block 123. The output unit 130 is configured to output the adjusted image data 300 to a storage device or a display device (e.g., the storage device 507 shown in FIG. 6 or the display device 10 shown in FIG. 2). The average image calculation block 121 and the image blending block 123 can be, for example, program codes, logic circuits, or other software or hardware capable of performing operations. In this embodiment, the average image calculation block 121 and the image blending block 123 of the processing unit 120 can be integrated into a camera device, a display, an image transmitter, or another suitable device.

As shown in FIG. 2, a display device 10 may comprise a plurality of pixels PX and a lens array 12 disposed on the pixels PX. The lens array 12 may, for example, comprise a plurality of lenses 12L arranged side by side in a direction D1, and the pixels PX are, for example, arranged in an array. The lenses 12L of this embodiment can be, for example, columnar. Each lens 12L may have a field of view (FOV), and in a top view direction TD, each lens 12L corresponds to n pixels PX, such that the pixels PX corresponding to the same lens 12L respectively present content from different viewing angles, thereby presenting the Kirameki effect that occurs when real light illuminates an object at different angles. For example, pixels PX1 to PXn correspond to the same lens 12L, wherein the pixels PX1 corresponding to different lenses 12L display images of the same viewing angle, and so on.

It should be noted that each first original image of the present disclosure can be, for example, an image of M × N pixels. The term "gray level" in the present disclosure can represent the gray level of a pixel in the i-th row and j-th column of a first original image, where M and N are positive integers, and i and j are respectively greater than 0 and less than or equal to M and N. For example, as shown in FIG. 3 and FIG. 4, the image data 200 may, for example, comprise original images V1 to V8. The original images V1 to V8 can each be an image of M × N pixels and correspond to different viewing angles within a viewing angle interval INT as shown in FIG. 3. The range of the viewing angle interval INT is the field of view FOV of the lens 12L shown in FIG. 2 or is determined by it, and is twice the angle θ. When the viewing angle is 0 degrees, it represents that a user is viewing along a normal line to the center of the display device 10. The angle θ in this embodiment can be 15 degrees or another suitable angle, but is not limited thereto. The images of the present disclosure can be two-dimensional or three-dimensional images. When the images are two-dimensional, images from different viewing angles may have the same pattern, but their corresponding pixels may have different gray levels to present the Kirameki effect.

Furthermore, an original curve 201 shown in FIG. 3 is a relationship curve of the gray levels of the pixels in the i-th row and j-th column of the original images V1 to V8 versus the viewing angles. That is, the curve shown in FIG. 3 is a relationship diagram of the gray level of a single pixel versus the viewing angle. When the viewing angle of a user exceeds one viewing angle interval INT, the user will see images displayed by pixels PX corresponding to different lenses 12L. Therefore, the image data 200 comprises multiple repeated viewing angle intervals INT, and the image gray level viewed in each viewing angle interval INT can be represented by the original curve 201. For ease of explanation, the number of original images V1 to V8 in FIG. 4 is 8, but it is not limited to this. In some embodiments, the number of original images can be greater than or equal to 20 and less than or equal to 80 to achieve more continuous image changes, thereby improving the user experience.

The image processing method of the display system 100 will be described below with reference to FIG. 1 to FIG. 4. First, the image data 200 is received by the input unit 110. Then, the image data 200 is adjusted by the processing unit 120 to generate the adjusted image data 300. Subsequently, the adjusted image data 300 is outputted by the output unit 130 to a storage device or a display device (e.g., the storage device 507 shown in FIG. 6 or the display device 10 shown in FIG. 2). The image data 200 of this embodiment may use the RGB color space, YCbCr color space, Lab color space, or another suitable color space.

The method for the processing unit 120 to generate the adjusted image data 300 may comprise averaging the gray levels of the plurality of first original images of the image data 200 by the average image calculation block 121 to generate an average image gray level, wherein a number of the first original images is greater than or equal to 8. In detail, as shown in FIG. 3, the average image calculation block 121 can average the 8 gray levels of the pixels in the i-th row and j-th column of the original images V1 to V8, for example, by arithmetic mean, to generate an average image gray level VA corresponding to the pixels in the i-th row and j-th column. By repeating the same step for different pixels, the average image gray level VA corresponding to each pixel can be obtained. In some embodiments, the average value can also be, for example, a weighted average or another suitable average value to fine-tune the image, thereby improving the user experience.

The method for the processing unit 120 to generate the adjusted image data 300 may further comprise processing the gray level of one of the first original images and the average image gray level VA by the image blending block 123 using a first interpolation formula. For example, the gray level of the pixel in the i-th row and j-th column of one of the original images V1 to V8 is blended with the average image gray level VA corresponding to the pixel in the i-th row and j-th column to generate a first new gray level VN1, for example, the first new gray level VN1 corresponding to the pixel in the i-th row and j-th column. The first interpolation formula is as follows: $VN 1 = GA \times r 1 + VA \times \left(1-r1\right)$ wherein GA is the gray level of the one of the first original images, r1 is a ratio of the gray level of the one of the first original images to the corresponding first new gray level, and r1 is greater than or equal to 0 and less than or equal to 1. The first new gray level corresponding to the pixel in the i-th row and j-th column may correspond to the same viewing angle as the one of the original images V1 to V8. By repeating the same step for different pixels of the same original image, the first new gray level for each pixel of a blended image corresponding to the same viewing angle can be obtained. Furthermore, by repeating the same step for different pixels of other original images, the first new gray level for each pixel of blended images corresponding to different viewing angles can be obtained, thereby generating the adjusted image data 300 comprising different blended images.

In FIG. 4, a blending ratio line MR represents the relationship between the ratio r1 corresponding to different first original images and the viewing angle. For example, the ratio r1 in the first interpolation formula corresponding to the original image V1 and the original image V8 is 0, while the ratio r1 corresponding to the original images V2 to V7 is 1. It should be noted that when the number of first original images is greater than 8, there may be other original images between the original image V1 and the original image V2. The corresponding ratio r1 can be greater than 0 and less than 1, and the closer the viewing angle is to the original image V2, the larger the ratio r1 can be. In this embodiment, the portion of the blending ratio line MR between the original image V1 and the original image V2 is a straight oblique line, meaning the ratio r1 has a linear relationship with the viewing angle, but it is not limited to this. In some embodiments, the portion of the blending ratio line MR between the original image V1 and the original image V2 can adopt a polynomial, exponential, logarithmic, or other suitable relationship to improve the user experience.

As shown in FIG. 3, the viewing angle interval INT has a sub-interval SUB adjacent to a boundary BD of the viewing angle interval INT. The one of the first original images processed by the image blending block 123 corresponds to the sub-interval SUB, and a ratio of the sub-interval SUB to the viewing angle interval INT is greater than or equal to 2.5% and less than or equal to 15%. For example, as shown by the blending ratio line MR in FIG. 4, only the ratios r1 corresponding to the original image V1 and the original image V8 are set to 0. It can be known from the first interpolation formula that the image blending block 123 processes the original images V1 and V8 and the average image gray level VA, while the original images V2 to V7 are not processed. The original image V1 and the original image V8 respectively correspond to two sub-intervals SUB near the left and right boundaries BD of the viewing angle interval INT, while the original images V2 to V7 correspond to other parts of the viewing angle interval INT. That is, the image blending block 123 only processes the first original images corresponding to the sub-intervals SUB of the viewing angle interval INT.

In the embodiment of FIG. 3, the image data 200 further comprises a plurality of second original images corresponding to another viewing angle interval INT adjacent to the viewing angle interval INT, wherein there is a boundary interval BDI between the another viewing angle interval INT and the viewing angle interval INT. For example, the image data 200 comprises multiple sets of the original images V1 to V8 shown in FIG. 4, wherein one set (i.e., the first original images) corresponds to a viewing angle interval INT1, and another set (i.e., the second original images) corresponds to another viewing angle interval INT2 adjacent to the viewing angle interval INT1, and there is a boundary interval BDI between the viewing angle intervals INT1 and INT2. The boundary interval BDI may, for example, comprise a sub-interval SUB1 of the viewing angle interval INT1 and a sub-interval SUB2 of the viewing angle interval INT2. By adjusting the relationship between the ratio r1 and the viewing angle within the boundary interval BDI by the image blending block 123, the gray level of the adjusted image data 300 can be obtained, which is the first new gray level of the blended images corresponding to different viewing angles. This has a relation curve with the viewing angles of the boundary interval BDI, represented by an adjusted curve 301 in FIG. 3, and the relation curve is continuous.

It should be noted that, as shown in FIG. 3, the unadjusted original curve 201 has a discontinuity at the boundary interval BDI, causing a user to see an unusually large image brightness difference when changing the viewing angle within the boundary interval BDI, thereby reducing the user experience. In contrast, since the adjusted curve 301 is continuous in the boundary interval BDI, it can reduce the probability of the user seeing an excessively large image brightness difference when changing the viewing angle within the boundary interval BDI, thereby improving the user experience. In addition, the curve shown in FIG. 3 is an example, and the curve may have different styles according to actual application situations.

The display system and the image processing method of the present disclosure are not limited to the above-mentioned embodiments and may have different embodiments. To simplify the description, the same reference numerals will be used to denote the same elements in the different embodiments below. To clearly explain the different embodiments, the differences between the different embodiments will be described below, and the repeated parts will not be described again.

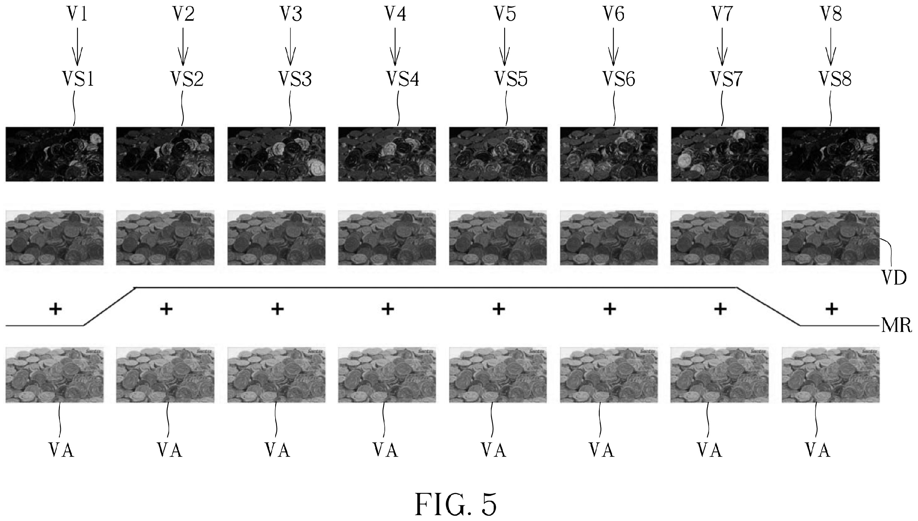

Please refer to FIG. 3 and FIG. 5 together. The main difference between this embodiment and the first embodiment is that the image blending block 123 uses a second interpolation formula to generate the adjusted image data 300. In detail, each of the first original images comprises a diffuse reflection gray level VD and a specular reflection gray level VS. For example, in FIG. 5, the gray level of the pixel in the i-th row and j-th column of the original images V1 to V8 can be distinguished into the diffuse reflection gray level VD and corresponding specular reflection gray levels VS1 to VS8. As shown in FIG. 3, the diffuse reflection gray level VD of the pixel in the i-th row and j-th column can be, for example, the minimum gray level value of the pixel in the i-th row and j-th column of the first original images within the viewing angle interval INT, and the specular reflection gray level VS of the pixel in the i-th row and j-th column can represent the difference between the gray level of the pixel in the i-th row and j-th column of the first original images within the viewing angle interval INT and the minimum gray level value. In this embodiment, the method for generating the adjusted image data 300 comprises processing, by the image blending block 123, the diffuse reflection gray level VD of one of the first original images, the specular reflection gray level VS thereof, and the average image gray level VA by using a second interpolation formula to generate a second new gray level VN2. For example, the diffuse reflection gray level VD of the pixel in the i-th row and j-th column of one of the original images V1 to V8, one of the corresponding specular reflection gray levels VS1 to VS8, and the average image gray level VA corresponding to the pixel in the i-th row and j-th column are blended to generate the second new gray level VN2 corresponding to the pixel in the i-th row and j-th column. The second interpolation formula of this embodiment is as follows:$VN 2 = \left[VD\times Kd+VS\times Ks\right] \times r 2 + \left[VD\times Kd+\left(VA-VD\right)\times Ka\right] \times \left(1-r2\right) ,$ wherein r2 is greater than or equal to 0 and less than or equal to 1, and Ka, Kd, and Ks are respectively weighting ratios for the average image gray level VA, the diffuse reflection gray level VD, and the specular reflection gray level VS, and are greater than or equal to 0 and less than or equal to 2. Same as the first embodiment, by repeating the same steps, the second new gray level for each pixel of the blended images corresponding to different viewing angles can be obtained, thereby generating the adjusted image data 300 comprising different blended images. Furthermore, in this embodiment, the adjusted curve 301 of the second new gray level versus the viewing angle is continuous in the boundary interval BDI, thereby improving the user experience.

For example, if Ka, Kd, and Ks are all 1, that is, without any weighting, the second interpolation formula is the same as the first interpolation formula of the first embodiment. In this embodiment, by adjusting the weighting ratios Ka, Kd, and Ks, the generated second new gray level can be adjusted according to the gray level (or brightness) differences at different viewing angles to achieve a more optimized image (e.g., enhancing brightness contrast or color saturation), thereby improving the user experience. Other parts of this embodiment can be similar or the same as the first embodiment, so reference can be made to the foregoing content, and details are not repeated here.

Please refer to FIG. 6. In this embodiment, the average image calculation block 121 and the image blending block 123 of FIG. 1 are disposed in a design system 400 or a content management system 500. In detail, the design system 400 may comprise a processing device 410 and a display 409, wherein the processing device 410 comprises an editing software 401 and a user interface 405. The processing device 410 can be, for example, a computer host or another suitable device. The editing software 401 can, for example, comprise software with image editing functions, allowing a designer to adjust image quality, add background patterns, or perform other suitable editing functions through the editing software 401. The average image calculation block 121 and the image blending block 123 can be disposed in the editing software 401. In some embodiments, the processing device 410 comprises a processing unit 403 having the editing software 401, and the average image calculation block 121 and the image blending block 123 can be disposed in the processing unit 403. The processing unit 403 can be, for example, the processing unit 120 of FIG. 1 or another suitable processing unit.

The user interface 405 can be an entry interface or a graphical user interface. For example, the Google Chrome browser can be used as the interface. In this embodiment, a designer can read the image data 200 through the user interface 405, for example, from a storage device or from a camera, an image design tool, or other suitable software/hardware.

In addition, when the processing device 410 is coupled to the display 409, the processing device 410 can read its device information 409D from the display 409, such as lens pitch, field of view, offset between lenses and pixels, or other parameters. A designer can edit or adjust the image data 200 through the processing device 410 based on the obtained device information 409D to generate the adjusted image data 300, and then transmit the adjusted image data 300 to the display 409. Therefore, the designer can view the adjusted image data 300 through the display 409.

After the designer completes the editing, the adjusted image data 300 can be transmitted to a content management system 500. The content management system 500 may comprise a server 501 and at least one terminal device 502 a,502b, wherein the server 501 is configured to transmit the adjusted image data 300 to the terminal device 502 a,502b. The server 501, for example, comprises a storage device 507 for storing the adjusted image data 300, wherein the storage device 507, for example, comprises a hard drive, a solid-state drive (SSD), or another suitable storage element. The server 501 can transmit to the terminal device 502, for example, through the Internet, and the terminal device 502 can be coupled to a display 509. The terminal device 502a,502b may comprise a local converter 504a,504b for transmitting the adjusted image data 300a,300b to the display 509a,509b according to the device information 509D,509d of the display 509a,509b. Thereby, a terminal user can see the adjusted image data 300a,300b provided by the designer. The display 509a,509b can be, for example, an advertising billboard or another suitable device. Other parts of this embodiment can be similar or the same as the first embodiment, so reference can be made to the foregoing content, and details are not repeated here.

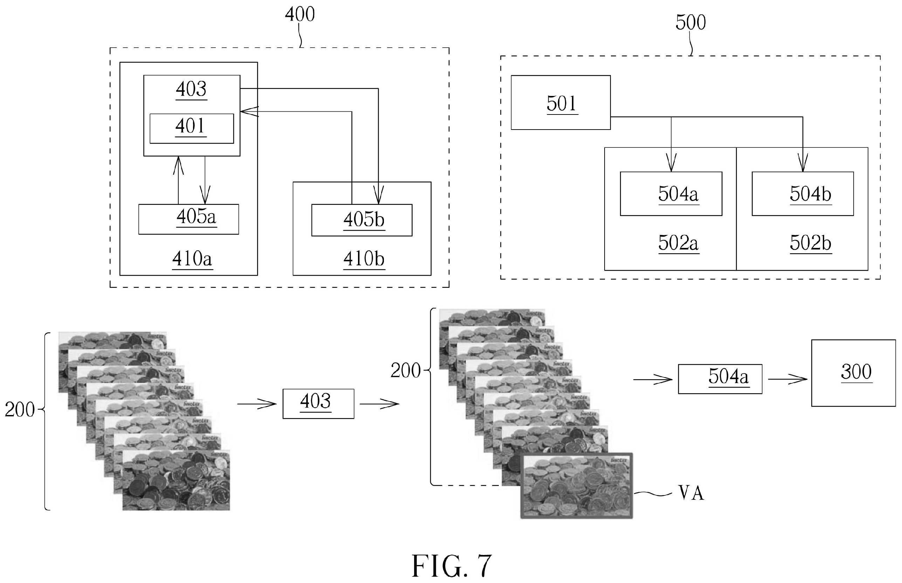

Please refer to FIG. 7. The main difference between this embodiment and the embodiment of FIG. 6 is that the average image calculation block 121 and the image blending block 123 shown in FIG. 1 are respectively disposed in the design system 400 and the content management system 500. In detail, this embodiment can adopt the embodiment of FIG. 4 to generate the adjusted image data 300, wherein the average image calculation block 121 can be disposed in the editing software 401 of the design system 400, and the average image gray level VA is obtained by the editing software 401. Then, the content management system 500 can transmit the image data 200 and the average image gray level VA to at least one terminal device 502a,502b. The image blending block 123 is disposed in a local converter 504a of the terminal device 502a, and the adjusted image data 300 is generated through the first interpolation formula. In addition, in this embodiment, multiple designers can collaborate on editing through an Intranet. For example, processing devices 410a ,410b can collaborate on editing through user interface 405a ,405b. Other parts of this embodiment can be similar or the same as the embodiment of FIG. 6, so reference can be made to the foregoing content, and details are not repeated here.

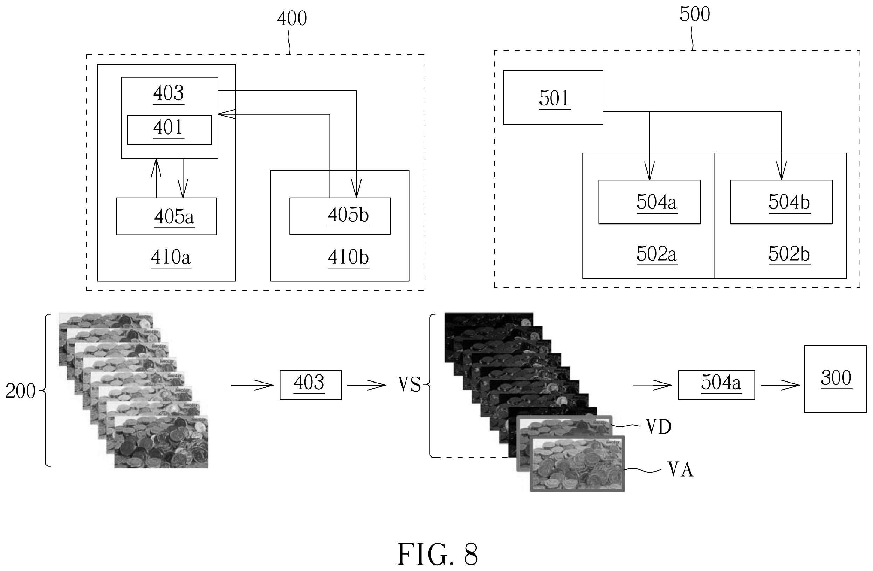

Please refer to FIG. 8. The main difference between this embodiment and the embodiment of FIG. 7 is that this embodiment adopts the embodiment of FIG. 5 to generate the adjusted image data 300. In detail, the processing unit 403 can process the image data 200 to generate the average image gray level VA, the specular reflection gray level VS, and the diffuse reflection gray level VD. Then, the content management system 500 can transmit the average image gray level VA, the specular reflection gray level VS, and the diffuse reflection gray level VD to at least one of the terminal device 502a,502b. The local converter 504a,504b of the terminal device 502a,502b can generate the adjusted image data 300 through the second interpolation formula. Other parts of this embodiment can be similar or the same as the embodiment of FIG. 7, so reference can be made to the foregoing content, and details are not repeated here.

In summary, in the display system and the image processing method of the present disclosure, the image data is adjusted by the average image calculation block and the image blending block of the processing unit, such that the relationship curve of the gray level of the adjusted image data versus the viewing angle is continuous within the boundary interval, thereby improving the user experience.

## Claims

1. A display system (100), **characterized by:**
an input unit (110) configured to receive an image data (200), wherein the image data (200) comprises a plurality of first original images (V1, V2, V3, V4, V5, V6, V7, V8) corresponding to a viewing angle interval (INT, INT1, INT2), and each of the plurality of first original images (V1, V2, V3, V4, V5, V6, V7, V8) has a gray level;
a processing unit (120) configured to adjust the image data (200) to generate an adjusted image data (300), wherein the processing unit (120) comprises an average image calculation block (121) and an image blending block (123); and
an output unit (130) configured to output the adjusted image data (300) to a storage device (507) or a display device (10).

2. The display system (100) of claim 1, wherein the average image calculation block (121) is configured to average the gray levels of the plurality of first original images (V1, V2, V3, V4, V5, V6, V7, V8) to generate an average image gray level (VA), wherein a number of the plurality of first original images (V1, V2, V3, V4, V5, V6, V7, V8) is greater than or equal to 8.

3. The display system (100) of claim 2, wherein the image blending block (123) is configured to process the gray level of one of the plurality of first original images (V1, V2, V3, V4, V5, V6, V7, V8) and the average image gray level (VA) by using a first interpolation formula to generate a first new gray level, wherein the first interpolation formula is as follows: $VN 1 = GA \times r 1 + VA \times \left(1-r1\right) ,$ wherein GA is the gray level of the one of the plurality of first original images (V1, V2, V3, V4, V5, V6, V7, V8), VA is the average image gray level (VA), VN1 is the first new gray level, and r1 is greater than or equal to 0 and less than or equal to 1.

4. The display system (100) of claim 3, wherein the viewing angle interval (INT, INT1, INT2) has a sub-interval (SUB) adjacent to a boundary (BD) of the viewing angle interval (INT, INT1, INT2), the one of the plurality of first original images (V1, V2, V3, V4, V5, V6, V7, V8) corresponds to the sub-interval (SUB), and a ratio of the sub-interval (SUB) to the viewing angle interval (INT, INT1, INT2) is greater than or equal to 2.5% and less than or equal to 15%.

5. The display system (100) of claim 2, wherein each of the plurality of first original images (V1, V2, V3, V4, V5, V6, V7, V8) comprises a diffuse reflection gray level (VD) and a specular reflection gray level (VS, VS1, VS2, VS3, VS4, VS5, VS6, VS7, VS8), and the image blending block (123) is configured to process the diffuse reflection gray level (VD), the specular reflection gray level (VS, VS1, VS2, VS3, VS4, VS5, VS6, VS7, VS8), and the average image gray level (VA) of one of the plurality of first original images (V1, V2, V3, V4, V5, V6, V7, V8) by using a second interpolation formula to generate a second new gray level, wherein the second interpolation formula is as follows:$VN 2 = \left[VD\times Kd+VS\times Ks\right] \times r 2 + \left[VD\times Kd+\left(VA-VD\right)\times Ka\right] \times \left(1-r2\right) ,$ wherein VA is the average image gray level (VA), VD is the diffuse reflection gray level (VD) of the one of the first original images (V1, V2, V3, V4, V5, V6, V7, V8), VS is the specular reflection gray level (VS, VS1, VS2, VS3, VS4, VS5, VS6, VS7, VS8) thereof, VN2 is the second new gray level, r2 is greater than or equal to 0 and less than or equal to 1, and Ka, Kd, and Ks are respectively greater than or equal to 0 and less than or equal to 2.

6. The display system (100) of any one of claims 1 to 5, wherein the average image calculation block (121) and the image blending block (123) are disposed in a design system (400) or a content management system (500).

7. The display system (100) of claim 6, wherein the average image calculation block (121) is disposed in an editing software (401) of the design system (400), and the image blending block (123) is disposed in a local converter (504a, 504b) of the content management system (500).

8. The display system (100) of any one of claims 1 to 7, wherein the average image calculation block (121) and the image blending block (123) are integrated into a camera device, a display, or an image transmitter.

9. The display system (100) of any one of claims 1 to 8, wherein the image data (200) further comprises a plurality of second original images (V1, V2, V3, V4, V5, V6, V7, V8) corresponding to another viewing angle interval (INT2) adjacent to the viewing angle interval (INT1), wherein there is a boundary interval (BDI) between the another viewing angle interval (INT2) and the viewing angle interval (INT1), a gray level of the adjusted image data (300) has a relation curve (301) with viewing angles of the boundary interval (BDI), and the relation curve (301) is continuous.

10. An image processing method, **characterized by:**
receiving an image data (200) by an input unit (110), wherein the image data (200) comprises a plurality of first original images (V1, V2, V3, V4, V5, V6, V7, V8) corresponding to a viewing angle interval (INT, INT1, INT2), and each of the plurality of first original images (V1, V2, V3, V4, V5, V6, V7, V8) has a gray level;
adjusting the image data (200) to generate an adjusted image data (300) by a processing unit (120), wherein the processing unit (120) comprises an average image calculation block (121) and an image blending block (123); and
outputting the adjusted image data (300) to a storage device (507) or a display device (10) by an output unit (130).

11. The image processing method of claim 10, wherein the step of generating the adjusted image data (300) comprises:
averaging, by the average image calculation block (121), the gray levels of the plurality of first original images (V1, V2, V3, V4, V5, V6, V7, V8) to generate an average image gray level (VA), wherein a number of the plurality of first original images (V1, V2, V3, V4, V5, V6, V7, V8) is greater than or equal to 8.

12. The image processing method of claim 11, wherein the step of generating the adjusted image data (300) further comprises:
processing, by the image blending block (123), the gray level of one of the plurality of first original images (V1, V2, V3, V4, V5, V6, V7, V8) and the average image gray level (VA) by using a first interpolation formula to generate a first new gray level, wherein the first interpolation formula is as follows: $VN 1 = GA \times r 1 + VA \times \left(1-r1\right) ,$
wherein GA is the gray level of the one of the plurality of first original images (V1, V2, V3, V4, V5, V6, V7, V8), VA is the average image gray level (VA), VN1 is the first new gray level, and r1 is greater than or equal to 0 and less than or equal to 1.

13. The image processing method of claim 12, wherein the viewing angle interval (INT, INT1, INT2) has a sub-interval (SUB) adjacent to a boundary (BD) of the viewing angle interval (INT, INT1, INT2), the one of the plurality of first original images (V1, V2, V3, V4, V5, V6, V7, V8) corresponds to the sub-interval (SUB), and a ratio of the sub-interval (SUB) to the viewing angle interval (INT, INT1, INT2) is greater than or equal to 2.5% and less than or equal to 15%.

14. The image processing method of claim 11, wherein each of the plurality of first original images (V1, V2, V3, V4, V5, V6, V7, V8) comprises a diffuse reflection gray level (VD) and a specular reflection gray level (VS, VS1, VS2, VS3, VS4, VS5, VS6, VS7, VS8), and the step of generating the adjusted image data (300) further comprises:
processing, by the image blending block (123), the diffuse reflection gray level (VD), the specular reflection gray level (VS, VS1, VS2, VS3, VS4, VS5, VS6, VS7, VS8), and the average image gray level (VA) of one of the plurality of first original images (V1, V2, V3, V4, V5, V6, V7, V8), by using a second interpolation formula to generate a second new gray level, wherein the second interpolation formula is: $VN 2 = \left[VD\times Kd+VS\times Ks\right] \times r 2 + \left[VD\times Kd+\left(VA-VD\right)\times Ka\right] \times \left(1-r2\right) ,$
wherein VA is the average image gray level (VA), VD is the diffuse reflection gray level (VD) of the one of the plurality of first original images (V1, V2, V3, V4, V5, V6, V7, V8), VS is the specular reflection gray level (VS, VS1, VS2, VS3, VS4, VS5, VS6, VS7, VS8) thereof, VN2 is the second new gray level, r2 is greater than or equal to 0 and less than or equal to 1, and Ka, Kd, and Ks are respectively greater than or equal to 0 and less than or equal to 2.

15. The image processing method of any one of claims 10 to 14, wherein the image data (200) further comprises a plurality of second original images (V1, V2, V3, V4, V5, V6, V7, V8) corresponding to another viewing angle interval (INT2) adjacent to the viewing angle interval (INT1), wherein there is a boundary interval (BDI) between the another viewing angle interval (INT2) and the viewing angle interval (INT1), a gray level of the adjusted image data (300) has a relation curve (301) with viewing angles of the boundary interval (BDI), and the relation curve (301) is continuous.
